# EUROPEAN PATENT APPLICATION

(11) **EP 1 840 803 A1**
(43) Date of publication of application: **03.10.2007**
(21) Application number: 07250848.4
(22) Date of filing: 28.02.2007
(51) Int. Cl.: G06N 5/02, H04L 29/06

(54) **User interface methods and apparatus for rules processing**

(30) Priority: 30.03.2006 US 396415
(71) Applicant: Pegasystems Inc., Cambridge, MA 02142-1590 (US)
(72) Inventor: Trefler, Alan, Pegasystems Inc., Cambridge, Massachusetts 02142-1590 (US); Akgonul, Kerim R., Newton, Massachusetts 02459 (US)
(74) Representative: Greenwood, John David

(57) **Abstract**

The invention provides, in one aspect, a user interface method that includes processing one or more BPM or other rules with a rules engine executing on a server digital data processor. The rules engine generates, for presentation on a client device, a user interface having one or more display, input or other elements specified by those rules. Related aspects of the invention provide methods as described above in which the rules engine generates the user interface dynamically, e.g., selecting and/or configuring the elements that make up that interface concurrently with the client-server session during which the interface (e.g., web page or other user interface paradigm) is requested by, transmitted to, and/or presented by the client device. Further aspects of the invention provide such a method, where the rules engine generates the interface, e.g., web page, with embedded BPM or other rules that are executed by the client device and that support automated decision-making, e.g., in the manner of rules executed by the rules engine itself.

## Description

### Background of the Invention

The invention relates to digital data processing and, more particularly, for example, to executing software applications that have meaningful and varying interactions with people.

Computer systems that facilitate business operations based on information specific to an industry or enterprise are well known in the art. These typically rely on rules identifying situations that are expected to arise during enterprise operation and the applicable responses. Such systems have been used in a range of applications, from health care to automotive repair. The rules on which they rely come from experts in the field, from the collective experience of workers on the "front line," or a combination of these and other sources.

Though many computer systems of this sort incorporate application-specific knowledge directly into source code (using, for example, a sequence of "if ... then ... else" statements, or the like), more complex systems store that knowledge separately from the programs that access it. Some use "rules bases" that store application-specific information in tables, database records, database objects, and so forth. An example of a system of this type is disclosed in commonly assigned United States Patent No. 5,826,250, entitled "Rules Bases and Methods of Access Thereof," the teachings of which are incorporated herein by reference.

These and other rules-based business process management (BPM) applications are commonly used in enterprise computing, for example, where they facilitate a range of business operations, from marketing to manufacturing to distribution to technical support. By way of example, a BPM application can implement data-processing workflows to support the handling of customer service requests received by retail and banking enterprises. By way of further example, BPM applications can be used in health care and insurance enterprises to support the automated routing and resolution of claims.

With increasing frequency, these applications are implemented with architectures that permit their use over the Internet, wide area networks, local area networks, and the like. A common such architecture provides a rules engine that executes on a server, e.g., co-located with the rules base at enterprise headquarters, and that processes requests entered by support personnel via web browsers executing on remotely disposed client devices (e.g., personal computers and personal digital assistants).

Other software applications are evolving similarly. Those that traditionally ran solely on the "desktop," are now increasingly being executed over the Internet or other networks. Word processing is one example. Though core functions are still supported by software resident on each user's computer, higher-end functionality may be delivered on demand from an enterprise or other server.

Unfortunately, the architectural evolution of BPM and other applications has not been accompanied by commensurate changes in their user interfaces. By way of example, users with data-capable mobile phones are often stymied in their attempts to utilize functionality delivered by servers, which often assume greater (or lesser) bandwidth, screen real estate, processing power or other capabilities than specific devices actually deliver.

An object of this invention is to provide improved systems and methods for digital data processing.

A more particular object, by way of example, is to provide improved user interface systems and methods for use with rules engines. A still more particular object is to provide such improved user interface systems and methods for use in business process management (BPM) applications.

A further object is to provide such improved user interface systems and methods as facilitate interaction with rules engines (by way of general example) and BPM applications (by way of more specific example) over the Internet and other networks.

Still another object of the invention is to provide such systems and methods as can be implemented on legacy, current and future digital data processing systems without undue cost or consumption of computing or network resources.

Yet still further objects of the invention are to provide such systems and methods where the processing is performed across a distributed environment (e.g. partially executing on local personal computers) or occurs on or in conjunction with mobile devices (such as mobile telephones or personal digital assistants).

### Summary of the Invention

These and other objects are attained by the invention which provides, in one aspect, a user interface method that includes processing one or more BPM or other rules with a rules engine executing on a server digital data processor. The rules engine generates, for presentation on a client device, a user interface having one or more display, input or other elements specified by those rules. The user interface can be, for example, a web page that the client device executes in a web browser.

Related aspects of the invention provide methods as described above in which the rules engine generates the user interface dynamically, e.g., selecting and/or configuring the elements that make up that interface concurrently with the client-server session during which the interface (e.g., web page) is requested by, transmitted to, and/or presented by the client device.

Further aspects of the invention provide such methods, where the user interface is a web page, and where the rules engine (i) selects and/or configures display, input and other elements for that page at the time the client device submits a request for it, and (ii) substantially concurrently transmits a markup language stream constructed from those elements to that device.

Still further aspects of the invention provide such methods in which the rules engine dynamically generates the user interface in accord with the context in which it will be transmitted to and/or executed by the client device, and/or of the user on behalf of which the page will be executed. That context can include, by way of non-limiting example, user "properties" (e.g., security permissions, age, locale, and so forth), client device properties (e.g., processor speed, display size, keyboard capabilities, and so forth), and communication channel properties (e.g., highspeed LAN, dial-up connection, and so forth).

By way of non-limiting example, when such methods are utilized in connection with an on-line retailing site, the rules engine can generate a web page with display and input elements representing a shortened order form with embedded scripts and/or drop-down selection lists to facilitate data input or display, if a user accesses that page via a mobile phone or via a dial-up connection. However, if the user accesses that same page via a personal computer and a highspeed connection, the rules engine can generate a web page with the elements of a longer order form with pop-up windows (e.g., in lieu of embedded lists and/or drop-down selection lists). Moreover, if the page is accessed by an under-age user, the rules engine generates a web page with elements representing a parental reminder notice in lieu of an order form.

Methods according to the invention can also include generating that interface (e.g., web page) with embedded BPM or other rules for execution by client devices. In addition to facilitating display and input operations, those locally executed rules can support automated decision-making, e.g., in the manner of rules executed by the rules engine resident on the server itself. In addition, the embedded rules can facilitate administrative functions on the client device, such as, transmission of data, URL generation, network authentication, and so forth.

Yet still further aspects of the invention provide methods as described above in which the rules engine generates a user interface, such as a web page, that includes (in addition to display and other elements) one or more selected user input fields for text, point-and-click selection, gestures and so forth. The page is generated in such a way that user input vis-à-vis those input fields is processed by the server, (i) prior to and/or in the absence of a "submit action" by the user visa-vis the web page, (ii) by logic incorporated on the web page other than by the rule(s) that specified the text input fields.

Related aspects of the invention provide methods as described above in which the user input vis-à-vis the selected input fields is processed by the rules engine.

Further related aspects of the invention provide such methods in which the submit action comprises user selection of a "submit button" on the web page, user selection of a radio button on the web page, user selection of a submit button on the web page, and/or user striking of the ENTER key (or the like) on the client digital data processor while a focus is on any of the web page or one of its input fields.

Still further aspects of the invention provide methods as described above in which the web page (or other user interface) additionally includes one or more output fields specified by the BPM or other rules. Related aspects of the invention include populating such an output field prior to and/or in the absence of a submit action with information generated as a result of processing user input vis-à-vis the selected input fields. This can be effected by logic incorporated on the web page other than by the rule(s) that specified the text input or output fields.

Yet still further aspects of the invention provide methods as described above in which the rules engine generates, as the user interface, a web page that comprises HTML and that further comprises JavaScript (or other scripts, controls or codes) for effecting processing of the user-entered data and/or populating of the output fields.

Still yet further aspects of the invention provide systems operating in accord with the methods, above.

These and other aspects of the invention are evident in the drawings and in the description that follows.

### Brief Description of the Drawings

A more complete understanding of the invention may be attained by reference to the drawings, in which:
Figure 1 depicts a digital data processing system of the type in which the invention is practiced;
Figure 2 depicts further details of the server digital data processor used in the system of Figure 1; and
Figure 3 is a flowchart depicting a method of operation of the system of Figure 1.

### Detailed Description of the Illustrated Embodiment

### Architecture

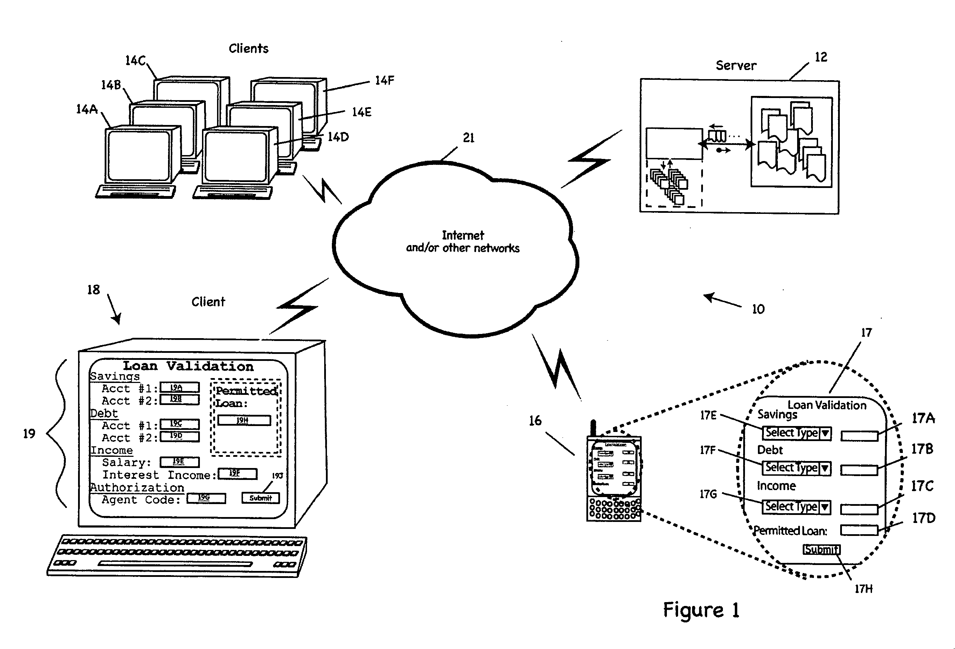

Figure 1 depicts a digital data processing system 10 of the type in which the invention may be practiced. This includes a server digital data processor 12 that is coupled to client digital data processors 14A - 14F, 16 and 18 via the Internet, a wide area network (WAN), metropolitan area network (MAN), local area network (LAN), telephone networks and/or a combination of these and other networks (wired, wireless, public, private or otherwise) - all indicated here by the element 21.

The illustrated digital data processors 12, 14A - 14F, 16, and 18 comprise personal computers, work stations, mainframes, personal digital assistants (PDAs), mobile phones, embedded processors and/or other digital data apparatus of the type known in the art, one or more of which can be adapted for operation in accord with the teachings hereof. Here, those digital data processors are of the type and configuration used in a corporate or enterprise environment, e.g., with a server 12 that is coupled to clustered workstations 14A - 14F, PDA (which term, as used herein, refers to both personal digital assistants and/or mobile phone) 16 and individual workstation 18 via network(s) 21; however, the invention may be practiced in any variety of other computing environments, networked or otherwise.

Moreover, the illustrated system 10 is shown with a single server 12 that co-houses both a rules engine and rules base, as discussed below; however, in other embodiments, multiple servers may be provided which may (or may not) include co-housed rules engines and rules bases. Still further, although server 12 of the illustrated embodiment is depicted as being remotely disposed from the client digital data processors 14A - 14F, 16 and 18, in other embodiments, one or more of the client devices may be disposed in vicinity of the server and, indeed, may be co-housed with it.

In the drawing, client PDA 16 and client digital data processor 18 (by way of example) are shown executing web browsers that "display" web pages 17, 19 received from server 12 via network(s) 21. In that drawing and throughout the discussion that follows, it will be appreciated that the illustrated web pages 17, 19 may be ones of many presented by the server 12 to the respective users of devices 16, 18, e.g., as part of respective online sessions. Those web browsers are of the conventional type known in the art operative on the respective devices for, by way of example, retrieving web pages, presenting those pages (visually, aurally, or otherwise), executing scripts, controls and other code on those pages, accepting user input with respect to those pages (e.g., for purposes of completing input fields), issuing HTTP requests with respect to those pages or otherwise (e.g., for submitting to a server information from the completed input fields), and so forth. The web pages can be in HTML or other conventional forms, including embedded XML, scripts, controls, and so forth - again, per convention in the art.

Illustrated web pages 17, 19 pertain to loan validation, though the invention can be practiced with web pages displaying (and accepting) any variety of substantive content. Here, the pages 17 and 19 display alternative forms of the same web page - i.e., and, more precisely, alternative forms of a markup language stream generated by server 12 in response to requests by browsers of the respective clients 16, 18 for the same URL.

Thus, web page 17 includes four input fields 17A - 17C for accepting savings balances, debt and income data from the user, e.g., in text, numeric and/or alphanumeric (collectively, "text") formats, and one output field 17D for displaying information based, e.g., on that input data - in this case a permitted loan amount. Further, the page includes drop-down selection fields 17E, 17F, 17G, allowing the user to characterize the data input in fields 17A, 17B, 17C, respectively. Still further, the page 17 can include a "submit" button 17H or other control such as a radio button, checkbox or other control (collectively, shown and referred to below as a "submit" button) of the type conventionally used in the art to permit the user to signify that the (completed) web page is ready for submission to the server. In the case of a PDA or mobile phone, such a control can be part of the device itself (such as an "OK" key, or the like).

Similarly, page 19 includes six input fields 19A - 19G for accepting savings account balances, debt, salary, interest income and authorization data from the user, e.g., in text format. Rather than dropdown selection fields, the page also includes an output field 19H for displaying information based, e.g., on that input data. Further, the page can include a "submit" button 19J, as above. In lieu of dropdown selection fields of page 17, page 19 capitalizes on the larger screen of device 18 to "spell out" or fixedly enumerate the various input options. Alternatively, or in addition, page 19 can use pop-up windows and other features that capitalize on the higher bandwidth via which device 18 communicates with server 12.

In addition to aforementioned input and selection fields, pages 17, 19 also include text and other display fields, e.g., explaining the input fields, describing the page more generally (not shown), and the like, in the conventional manner known in the art. These fields may be supplemented and/or replaced by aural presentation fields (e.g., music files) and the like, again, in the conventional manner known in the art.

Notwithstanding the number and type of input fields, output fields, submit buttons and other elements shown in the drawing for pages 17, 19, it will be appreciated that the invention can be practiced with other numbers of these elements.

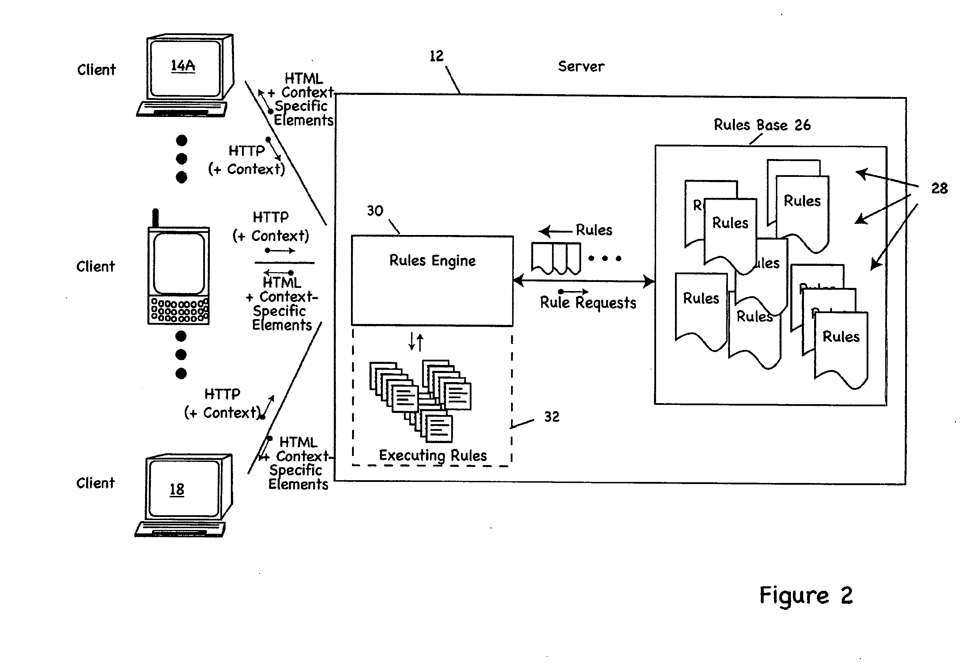

Figure 2 depicts further details of the server digital data processor 12 and its interaction with the client devices, here, represented by client digital data processors 14A, 16, 18. Particularly, for example, the server includes a rules base 26 storing rules 28, as well as rules engine 30 for accessing and processing those rules. Illustrated server 12 is used for business process management (BPM) applications of the type known in the art, though other embodiments of the invention may be used for other applications.

Illustrated rules base 26 is constructed and accessed in the conventional manner known in the art of rules bases. The digitally-encoded rules 28 that it contains are likewise formatted and stored in the conventional manner known in the art. Here, rules base 26 is configured and contains rules 28 for use in BPM applications, though in other embodiments it may be configured and used for other applications. An example of the structure, operation and use of the rules base 26 and rules 28 is provided in commonly assigned United States Patent No. 5,826,250, entitled "Rules Bases and Methods of Access Thereof," the teachings of which are incorporated herein by reference.

Rules engine 30 is of the conventional type known in the art for use in processing rules, e.g., retrieved from a rules base, in order to respond to (or propose responses to) events signaled to the engine. In the illustrated embodiment, the rules engine is of the type used for BPM applications, though in other embodiments it may be of the type used for other applications.

### Operation

Generally speaking, in operation, rules engine 30 responds to signaling, e.g., received from the client devices (e.g., by way of HTTP requests), currently executing rules 32, or otherwise, to generate web pages for transmittal to the client devices 14A - 14F, 16 and 18 for display/execution by their respective web browsers.

Thus, for example, in response to a request for "loan validation" web page 19 by the web browser of client digital data processor 18, the rules engine retrieves rules 28 implicated by that request from the rules base 26 (if it has not already done so), as determined by the request itself, the context, the state of currently executing rules for that user, and so forth. It then processes those rules, e.g., in view of that context, to select which input fields (here, fields 19A - 19G), output fields (here, field 19H), submit buttons (here, button 19J), display elements, etc., to include on the page and how to configure those elements.

In the illustrated embodiment, this contextual selection and configuration is embedded in the rules themselves and/or forms part of the systematic processing of markup language streams discussed below, and does not require the individual web pages to be hand-coded to account for a variety of possible contexts - as is conventional in the art. Moreover, it extends beyond selection and configuration of input and display elements *per se.* It can also include embedding in headers or other elements of the web pages selected rules that might otherwise be executed by the rules engine 30 and that are relevant to a given context, for example, so that edits, automatic "showing" of sections and recalculations can be executed local to the client device, rather than in the rules engine 30 on the server 12. One example of this is the pre-processing of user-entered data, selections and/or gestures, discussed below, thus, altering the user experience by changing the code running on the client device or by making the that device dynamically interact.

In the foregoing regards, "context" refers to the context in which the requested web page will be communicated to and executed on the client device. That context can include, by way of non-limiting example, user "properties" (e.g., security permissions, age, locale, and so forth), client device 18 properties (e.g., processor speed, display size, keyboard capabilities, and so forth), and communication channel properties (e.g., the speed and type of connection between devices 12 and 18).

Based on these selections and configuration, the engine 30 constructs a markup language stream, e.g., in HTML or other conventional format or protocol. That stream (or, more accurately, markup language document) is transmitted by the server 12, per convention, to the requesting client digital data processor 18 for response by the user-in this case, completion of input fields 19A -19G. In the illustrated embodiment, the engine 30 constructs and forwards the stream to the browser of device 18 substantially concurrently with its request for the corresponding web page, i.e., during the same online session on which that request was made and/or within the conventional time periods expected for response to a web page, though these are not requirements of the invention. The browser of device 18 likewise substantially concurrently executes that stream for display to the user, e.g., within that same online session and/or within the conventional time periods expected for execution of a web page though, again, this is not a requirement of the invention. The resulting user display is shown in Figure 1, as described above.

Rules engine 30 responds similarly to requests for that same loan validation web page from the web browser of client digital data processor 16, taking context into account, as discussed above. The resulting user display is also shown in Figure 1.

Upon comparison of the web pages 17, 19 of Figure 1, it is evident that rules engine 30 renders fewer fields on the smaller PDA 16 (with its reduced-size screen and lower bandwidth connection to server 12), utilizing a small number of input and display elements and using drop-down selection menus, e.g., instead of popup windows, to characterize user input. In other embodiments, the rules engine can assemble the web pages to take into account still other factors, e.g., user authorization, age, and so forth.

Further ramifications of the rules engine's contextual selection and configuration of user interface elements may be appreciated in respect to web page 19 (although, the same feature may be presented with respect to web page 17). Particularly, in the normal course, once the web page 19 is rendered on the client device 18, the user would complete the input fields and strike the submit button 19J, causing the user-entered values to be transmitted to the server 12, by way of an HTTP request (as conventional in the art), for processing by the rules engine, e.g., in accord with currently executing rules 32 and/or rules 28 newly retrieved from the rules base 26, as above, in accord with the current user context and state. The engine would then generate a markup language stream, in accord with those rules, for the updated web page 19, including an output field 19H populated with information (here, a permitted loan amount) based on the user-entered data. As above, it would then effect transmittal of that markup language stream to the client digital data processor 18 for consideration by the user.

While the illustrated embodiment can permit this very form of conventional operation, it also breaks from convention by incorporating, in the markup language streams, logic that causes data, point-and-click selections, gestures and so forth (collectively, "data") made with respect to at least selected input fields 19A - 19G of the web page 19 to be "pre-" or "asynchronously" processed by the rules engine 30. That is, the logic causes that data to be transmitted to and processed by the rules engine 30 prior to and/or in the absence of a "submit action" by the user vis-à-vis the displayed web page 19. Moreover, the logic permits information generated by the rules engine 30 (based on such processing) that is transmitted back to the client digital data processor 18 to be incorporated into the web page 19 and, more specifically, into the output fields 19H - again, prior to and/or in the absence of a submit action by the user vis-à-vis the displayed web page. Indeed, while the data is being transmitted to and processed by the rules engine 30, and while the information generated by it is being transmitted back to the client digital data processor and loaded into the output fields, the user can continue reviewing the web page 19 and entering/modifying data in the input fields 19A - 19F.

As used here, a "submit action" is a user action intended to signify that input fields 19A - 19G of the web page 19 are completed (or sufficiently completed) and ready for submission to the server. These are conventional actions known in the art, such as, user selection of the "submit button" 19J (including, user selection of a designated radio button on the web page or user selection of a designated submit button on the web page), and/or user striking of the ENTER key (or the like) on the client digital data processor 18 while a focus is on any of the web page 19 or one of its input fields 19A - 19G.

In some embodiments, if the user takes one of those submit actions with respect to web page 19, the user-entered data within input fields 19A - 19G can be transmitted to the server 12 by way of a conventional HTTP request, and an HTML stream representing an updated web page can be transmitted back to the client digital data processor 18 in the normal course (as discussed above).

Pre-processing (or asynchronous processing) of user-entered data in accord with the teachings hereof, on the other hand, is effected whenever a user completes or updates at least designated ones of input fields 19A - 19G, and is triggered when the user exits those fields (e.g., by way of striking the tab key, mouse-clicking another field, and so forth). Pre-processing can also be effected when the user makes point-and-click selections, gestures and so forth with respect to the selected input fields or, more generally, with respect to the page as a whole. In the illustrated embodiment, Asynchronous JavaScript and XML ("Ajax") logic is incorporated by the server digital data processor 12 into the markup language streams (i.e., web pages) sent to the client digital data processors to effect such pre-processing, though techniques other than Ajax developed in the art may be used to this end, as well.

In one example of use of Ajax technology, the rules engine 30 embeds in a first instance of the web page 30 sent to client digital data processor 18, JavaScript (or other scripts or controls) responsible for (i) rendering that page within the web browser, (ii) monitoring entry and/or modification of data in the input fields of that page, triggered as discussed immediately above, e.g., when the user exits a field, (iii) transmitting that user-entered data to the server digital data processor 12, e.g., by way of HTTP requests with embedded XML, and (iv) re-rendering the page (or a portion thereof) with information received from the server 12 based on pre-processing of the user-entered data. Depending on implementation requirements, transmission of user-entered data to the server digital data processor 12 can be effected whenever the user enters or modifies data in an input field or, alternatively, only when such an event follows user completion of a sufficient number of fields to enable rules engine 12 to generate a substantive response; the sufficiency of the field completion in this regard can be tested by the Ajax (or like) code. Moreover, when transmitting the user-entered data to the server digital data processor 12, the embedded JavaScript (or other) code can, additionally, provide identifiers associated with the input fields that have been changed by the user. In any event, transmission of the user-entered data need not wait until the user takes a submit action.

In the illustrated embodiment, the responsibilities of the Ajax (or like) code embedded in the web page additionally includes monitoring for a submit action (as well as for entry and/or modification of input fields). When the user takes such an action, the user-entered data is transmitted to the server digital data processor 12 and the web page is re-rendered in response to information transmitted back from the server, in accord with points (iii) and (iv) of the prior paragraph.

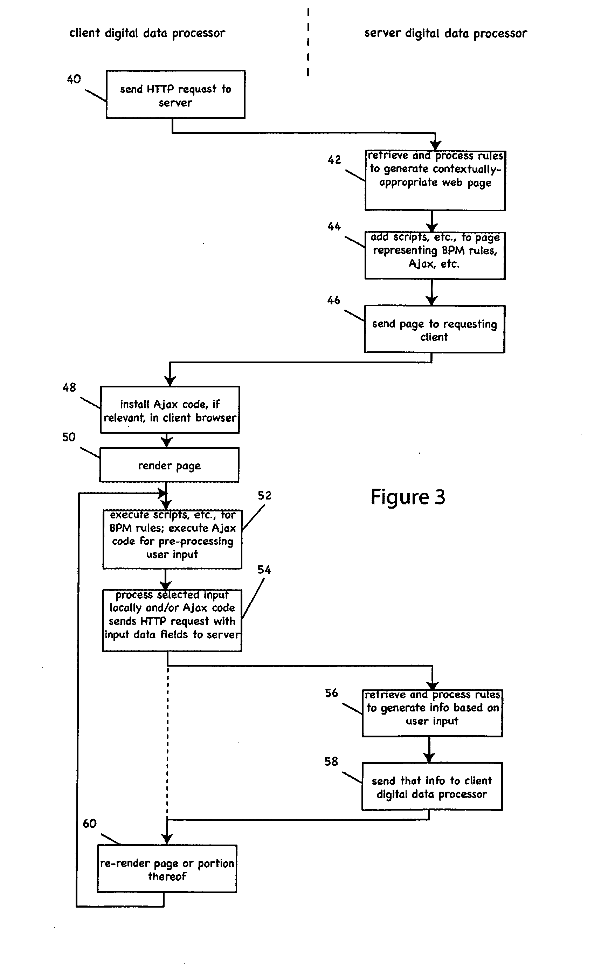

Figure 3 is a flow-chart depicting processing effected by the embedded code in such embodiments. Though the flow chart is self-explanatory in view of the discussion above, the steps are reprinted below for completeness. The embedded code is referred to as "Ajax code," though it will be appreciated (as noted above) that alternate coding techniques known in the art can be used instead, or in addition:

| Step | Action | Actor |
|---|---|---|
| 40 | send HTTP request to server | Client (browser) |
| 42 | retrieve and process rules to generate contextually-appropriate web page, including selection and configuration of input, output and other fields | Server (rules engine) |
| 44 | add scripts, controls or other code to web page for BPM, pre-processing (Ajax), etc. | Server (rules engine) |
| 46 | send page to requesting client | Server |
| 48 | install Ajax code, if present, in client browser | Client (browser) |
| 50 | render page | Client (Ajax code) |
| 52 | execute BPM on page; execute Ajax code that monitors for entry/modification of data in input fields, as well as for "submit" actions | Client (Ajax code) |
| 54 | send HTTP requests with user input data fields to server or process locally (depending on selection and configuration of elements in page) | Client (Ajax code) |
| 56 | if input data sent to server, retrieve and process rules to generate info based on user input | Server (rules engine) |
| 58 | if input data sent to server, send resulting info to client digital data processor | Server |
| 60 | re-render modified page | Client (Ajax code) |

As noted above, rules 28 executed by the rules engine 30 can effect embedding of logic on the web pages for purposes of execution of rules (including the aforementioned pre-processing functionality) directly on the client device. That logic, however, need not be defined by nor contained in the rules 28 that *per se* specify the text input fields 19A -19G or output field 19H of the web page 19. Instead, the JavaScript (or other scripts or controls) representing those rules is added by the rules engine 30 based on a "global" rule or rules applicable, e.g., to all rules engine-generated web pages of a specific type, for a specific user, and so forth, depending on implementation requirements. In some embodiments of the invention, these "global" (or other) rules incorporate field identifiers into the markup language stream (i.e., web pages) sent to the client digital data processor. These field identifiers can be used by the JavaScript (or other scripts or controls) in connection with processing the user-entered data values locally on in the rules engine 30.

Described herein are methods and systems meeting the objects set forth above, among others. It will be appreciated that the illustrated embodiments and those otherwise discussed herein are merely examples of the invention and that other embodiments, incorporating changes thereto, fall within the scope of the invention, of which we claim:

## Claims

1. A user interface method for digital data processing, comprising:
A. processing, with a rules engine executing on a server digital data processor, one or more rules,
B. generating, as a result of processing those one or more rules, a user interface having one or more display, input or other elements specified by those rules, and
C. executing that user interface on a client device that is coupled to the server digital data processor by way of a network.

2. The method of claim 1, wherein step (B) includes generating the user interface dynamically by selecting and/or configuring the elements that make up the user interface concurrently with an online session during which that interface is any of requested by, transmitted to, and/or executed by the client device.

3. The method of claim 2, wherein
i. step (B) includes generating, as the user interface, a web page, and
ii. step (D) includes executing the web page in a web browser executing on the client device.

4. The method of claim 3, wherein step (B) includes dynamically generating the web page in accord with a context in which the page will be transmitted to and/or executed by the client device, and/or of the user on behalf of which the page will be executed.

5. The method of claim 4, wherein the context includes any of security permissions, age, and locale of the user on behalf of which the page is executed; a processor speed, display size, and keyboard capabilities, of the client device; and, a speed of connection between the client device and the server digital data processor.

6. The method of claim 4, wherein step (B) includes generating the web page to include any of scripts, controls or other codes embodying one or more rules selected and/or configured in accord with the aforesaid context.

7. The method of claim 4, wherein step (B) includes generating the web page to include any of scripts, controls or other codes that, when executed by the client device, cause one or more input fields, user selections and/or user gestures to be processed by the server.

8. A user interface method for digital data processing, comprising:
A. processing, with a rules engine executing on a server digital data processor, one or more rules and generating, as a result of processing those one or more rules, a web page with one or more text input fields specified by those rules,
B. displaying the web page on a client digital data processor,
C. accepting from a user, via the client digital data processor, any of text, numeric or alphanumeric data in at least a selected text input field, and
D. processing the data accepted in step (C) on the server digital data processor, the processing step being executed any of prior to or without a submit action by the user with respect to the web page,
E. where the processing step of step (D) is effected by logic incorporated on the web page other than by those rules that specified the text input fields.

9. The method of claim 8, wherein step (D) includes processing the data accepted in step (C) in the rules engine executing on the server digital data processor.

10. The method of claim 8, wherein the submit action comprises any of
i. selecting a submit button on the web page,
ii. selecting a radio button on the web page,
iii. selecting a checkbox on the web page,
iv. striking an ENTER key on the client digital data processor while a focus of the client digital data processor is on any of the web page or an input field thereof.

11. The method of claim 8, wherein step (A) includes generating the web page on the server digital data processor with one or more output fields specified by one or more of the rules.

12. The method of claim 11, comprising displaying in at least a selected one of the output fields information generated by the server digital data processor in step (D), the displaying step being executed prior to or without said submit action by the user with respect to the web page.

13. The method of claim 12, where the displaying step is effected by logic incorporated on the web page other than as a result of processing of those rules that specified the text input or output fields.

14. The method of claim 8, wherein step (A) comprises generating the web page in a mark-up language that includes the aforesaid logic for effecting the processing of step (D).

15. The method of claim 14, wherein step (A) comprises generating the web page in HTML with JavaScript, or other scripts, controls or other codes for effecting the processing of step (D).

16. A user interface method for digital data processing-based business process management (BPM) rules execution, comprising:
A. executing a rules engine on a server digital data processor and processing with that rules engine one or more BPM rules,
B. responding to a request for a web page by a first client device by generating on the server digital data processor, as a result of processing said one or more BPM rules, a markup language stream for execution on the first client device, wherein the markup language streams include one or more display, input or other elements specified by those rules,
C. responding to a request for the web page by a second client device by generating on the server digital data processor, as a result of processing said one or more BPM rules, a markup language stream for execution on the second client device, wherein the markup language stream includes one or more display, input or other elements specified by those rules,
D. wherein the generating steps of (B) and (C) each include selecting and/or configuring the elements that make up the respective markup language streams based on a respective context in which each of those streams will be transmitted to and/or executed by the respective client device, and/or of the respective user on behalf of which the respective markup language streams will be executed,
E. executing the respective markup language streams in web browsers of the respective client devices.,

17. The method of claim 16, wherein the context includes any of security permissions, age, and locale of the user on behalf of which the respective markup language streams is executed; a processor speed, display size, and keyboard capabilities, of the client device; and, a speed of connection between the client device and the server digital data processor.

18. The method of claim 16, wherein the generating step of (B) and (C) include generating the markup language streams to include any of scripts, controls or other codes embodying one or more rules selected and/or configured in accord with the aforesaid contexts.
